(19) Europäisches Patentamt
European Patent Office
Office européen des brevets

(11) **EP 4 167 107 A1**

(12) **EUROPEAN PATENT APPLICATION**
published in accordance with Art. 153(4) EPC

(43) Date of publication:
**19.04.2023 Bulletin 2023/16**

(21) Application number: **21837926.1**

(22) Date of filing: **12.06.2021**

(51) International Patent Classification (IPC):
**G06F 16/583** (2019.01)

(52) Cooperative Patent Classification (CPC):
**G06F 16/583**

(86) International application number:
**PCT/CN2021/099890**

(87) International publication number:
**WO 2022/007596 (13.01.2022 Gazette 2022/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.07.2020  CN 202010645032
30.12.2020  CN 202011621979**

(71) Applicant: **Huawei Technologies Co., Ltd.
Longgang District,
Shenzhen,
Guangdong 518129 (CN)**

(72) Inventor: **PENG, Xihan
Shenzhen, Guangdong 518129 (CN)**

(74) Representative: **Gill Jennings & Every LLP
The Broadgate Tower
20 Primrose Street
London EC2A 2ES (GB)**

(54) **IMAGE RETRIEVAL SYSTEM, METHOD AND APPARATUS**

(57)    An image search system including an interface and a compute engine set is provided. The interface is configured to obtain a to-be-searched image. The compute engine set includes a first compute engine and a second compute engine. The first compute engine is configured to compute similarities between the to-be-searched image and a plurality of images included in a gallery; and the second compute engine is configured to determine a search result based on the similarities between the searched image and the plurality of images included in the gallery, where the search result includes a target image similar to the to-be-searched image. In this way, an image search processing speed is improved, and a data processing delay is shortened.

FIG. 2

## Description

### TECHNICAL FIELD

This application relates to the field of computers, and in particular, to an image search system, method, and apparatus.

### BACKGROUND

With development of computer technologies, image search technologies gradually become a research hotspot, and have a wide variety of application scenarios. For example, in a commodity image search function, a gallery is searched based on an image provided by a user, to find a same or similar commodity, and then the found commodity is recommended to the user; or in a search service of copyright determining, a same or similar image is searched in a massive gallery by using an image as a search object, to determine whether the search object has a copyright infringement.

In a conventional image search process, a central processing unit (central processing unit, CPU) that provides an image search function usually directly loads images in a gallery to a main memory (main memory) based on a user search request, and then compares similarities between a query image and the images in the gallery, to determine an image that is the same as or similar to the query image. However, when the gallery includes massive data, because the CPU needs to perform operations such as data processing and distance computing in the image search process, the process is complex and time-consuming, and a real-time requirement of image search cannot be met. Therefore, how to provide an efficient image search method becomes an urgent technical problem to be resolved.

### SUMMARY

This application provides an image search method. An image search operation is performed by a heterogeneous system including a plurality of computing engines, and each operation process in image search is performed by using an idea of "dedicated people are assigned for dedicated work". This avoids a problem that processing is complex and time-consuming because a single CPU is used to perform an image search process, thereby improving image search efficiency.

According to a first aspect, an image search system is provided. The system includes an interface configured to obtain a to-be-searched image and a compute engine set including a first compute engine and a second compute engine. The first compute engine is configured to calculate similarities between the to-be-searched image and a plurality of images included in a gallery. The second compute engine is configured to determine a search result based on the similarities between the to-be-searched image and the plurality of images included in the gallery. The search result includes a target image similar to the to-be-searched image. In the foregoing image search system, the image search operation may be performed by using the compute engine set, so as to determine the search result based on the similarities between the to-be-searched image and the images in the gallery, thereby avoiding a problem of long time consumption and low efficiency caused by performing an image search operation by a single CPU.

In a possible implementation, the similarities between the to-be-searched image and the plurality of images included in the gallery are obtained based on distances between a query vector corresponding to the to-be-searched image and center vectors corresponding to the plurality of images. Alternatively, the similarities between the to-be-searched image and the plurality of images included in the gallery are the distances between the query vector corresponding to the to-be-searched image and the center vectors corresponding to the plurality of images. In the image search system claimed in this application, similarities between images are measured by using distances between vectors, so as to determine an image that matches a to-be-searched image.

In another possible implementation, in an image search processing process, the first compute engine is specifically configured to convert the query vector into a query matrix, convert the center vectors into center matrices, and obtaining a distance table based on the query matrix and the center matrices, where the distance table is used to determine the distances between the query vector corresponding to the to-be-searched image and the center vectors corresponding to the plurality of images. The first compute engine may be configured to process matrix related computing. In a process of computing distances between vectors, a distance computing process may be mapped to a matrix processing process, and then the dedicated first compute engine completes matrix related processing, thereby improving a speed of the distance computing process and improving processing efficiency of the entire image search process.

In another possible implementation, the image search system further includes a shared memory. The shared memory is connected to the first compute engine through an internal bus. The first compute engine is further configured to store the distance table in the shared memory through the internal bus. With the shared memory added to the image search system, the first compute engine and the second compute engine may access data in the storage medium in a shared manner. For example, the first compute engine may store the distance table in the shared memory, and the second compute engine may obtain the distance table from the shared memory, and complete another processing operation for image search based on the distance table, thereby avoiding a problem of a slow memory access speed and a cache miss (cache miss) caused by using a storage medium outside the image search system to store the distance table, and further improving an image search speed.

In another possible implementation, the shared memory is connected to the second compute engine through the internal bus; and the second compute engine is specifically configured to: obtain the distance table from the shared memory; and determine, based on the distance table, whether the gallery includes the target image similar to the to-be-searched image. Because both the first compute engine and the second compute engine can access the shared memory, the second compute engine may obtain the distance table from the shared memory, and perform subsequent processing based on the distance table, so as to avoid a time-consuming problem caused by a cache miss (Cache miss) due to obtaining data from a memory of a host system, and accelerate a data processing speed.

In another possible implementation, the image search system further includes a third compute engine, where the third compute engine is configured to obtain an index list corresponding to the images in the gallery, and the third compute engine may also be referred to as a direct memory access engine, and is configured to obtain, in a direct memory access manner, data in a memory connected to the host system; and the second compute engine is specifically configured to: obtain a distance matrix based on the distance table and the index list, where the distance matrix is used to indicate a distance value associated with each index in the index list; and determine, based on the distance matrix, the distances between the query vector corresponding to the to-be-searched image and the center vectors corresponding to the plurality of images. The second compute engine may compute the similarities between the vectors based on the distance table and the index list, and determine an image that matches the to-be-searched image. In addition, the distance table and the index list are stored in the shared memory, so that a processing speed of random read required in a process of generating the distance matrix can be accelerated, and data processing efficiency can be improved.

In another possible implementation, the second compute engine is specifically configured to: determine, based on the distance matrix, a sorting result of the distances between the query vector corresponding to the to-be-searched image and the center vectors corresponding to the plurality of images, and determine the search result. The distance matrix is used to identify distances between each segment of the to-be-searched image and corresponding segments of the center vectors. The distances between the query vector of the to-be-searched image and the center vectors may be further determined based on the distance matrix, and the distances are further sorted to finally determine the search result.

In another possible implementation, the second compute engine is specifically configured to determine the search result based on a preset threshold, where a distance between a vector associated with the image included in the search result and the query vector meets a preset condition, and the preset condition includes that the distance between the vector associated with the image and the query vector is greater than or equal to the preset threshold, or the distance between the vector associated with the image and the query vector is less than the preset threshold. In addition to obtaining the search result in the sorting manner, one or more images that meet the condition may be further determined as the search result by using the preset threshold, and the search result that matches the to-be-searched image may also be found.

In another possible implementation, the image search system is a chip or a PCIe card, and the first compute engine and the second compute engine are connected through the internal bus. In a connection manner of using an internal bus, a data transmission path between the first compute engine and the second compute engine is shorter, and a data transmission speed is higher.

In another possible implementation, the first compute engine and the second compute engine in the compute engine set are separately logical circuits. By using the first compute engine and the second compute engine that are constructed by using the dedicated logic circuits, different hardware engines may be used for different types of computing operations, so as to complete data processing more quickly.

In another possible implementation, the system is a virtualized system, and the first compute engine and the second compute engine in the compute engine set are separately virtual machines or containers running on devices in the virtualized system. In addition to using the hardware engines constructed by the hardware circuits to implement the foregoing matrix computing, vector computing, and scalar computing, a virtualized virtual machine or container may be used to implement a function of each hardware engine. In this case, the efficient image search method provided in this application may also be implemented in a data center.

In another possible implementation, the to-be-searched image is from a search request, and the search request includes at least one to-be-searched image, or the search request includes a to-be-searched video, and the to-be-searched video includes at least one frame of the to-be-searched image. In addition to image search processing, this application may also be applicable to a video search process. Each frame of image may be separately searched based on the foregoing image search process, or a search result may be quickly obtained by using the compute engine set.

According to a second aspect, this application provides an image search method, where the method is applicable to an image search system, the image search system includes an interface and a compute engine set, the compute engine set includes a first compute engine and a second compute engine. A specific search process includes: The first compute engine computes similarities between a to-be-searched image and a plurality of images included in a gallery. The second compute engine computes a search result based on the similarities between the to-be-searched image and the plurality of images included in the gallery, where the search result includes whether the gallery includes a target image similar to the to-be-searched image.

In a possible implementation, the similarities between the to-be-searched image and the plurality of images included in the gallery are obtained based on distances between a query vector corresponding to the to-be-searched image and center vectors corresponding to the plurality of images. Alternatively, the similarities between the to-be-searched image and the plurality of images included in the gallery are the distances between the query vector corresponding to the to-be-searched image and the center vectors corresponding to the plurality of images. In the image search system claimed in this application, similarities between images are measured by using distances between vectors, so as to determine an image that matches a to-be-searched image.

In another possible implementation, in an image search processing process, the first compute engine converts the query vector into a query matrix, converts the center vectors into center matrices, and obtains a distance table based on the query matrix and the center matrices, where the distance table is used to determine the distances between the query vector corresponding to the to-be-searched image and the center vectors corresponding to the plurality of images. The first compute engine may be configured to process matrix related computing. In a process of computing distances between vectors, a distance computing process may be converted to a matrix processing process, and then the dedicated first compute engine completes matrix related processing, thereby improving a speed of the distance computing process and improving processing efficiency of the entire image search process.

In another possible implementation, the image search system further includes a shared memory. The shared memory is connected to the first compute engine through an internal bus. The first compute engine stores the distance table in the shared memory through the internal bus. With the shared memory added to the image search system, the first compute engine and the second compute engine may access data in the storage medium in a shared manner. For example, the first compute engine may store the distance table in the shared memory, and the second compute engine may obtain the distance table from the shared memory, and complete another processing operation for image search based on the distance table, thereby avoiding a problem of a slow memory access speed and complex processing caused by using a storage medium outside the image search system to store the distance table.

In another possible implementation, the shared memory is connected to the second compute engine through the internal bus; and the second compute engine obtains the distance table from the shared memory, and determines, based on the distance table, whether the gallery includes the target image similar to the to-be-searched image. Because both the first compute engine and the second compute engine can access the shared memory, the second compute engine may obtain the distance table from the shared memory, and perform subsequent processing based on the distance table, so as to avoid a time-consuming problem caused by a cache miss (Cache miss) due to obtaining data from a memory of a host system, and accelerate a data processing speed.

In another possible implementation, the image search system further includes a third compute engine, where the third compute engine can obtain an index list corresponding to the images in the gallery, and the third compute engine may also be referred to as a direct memory access engine, and is configured to obtain, in a direct memory access manner, data in a memory connected to the host system; and the second compute engine obtains a distance matrix based on the distance table and the index list, where the distance matrix is used to indicate a distance value associated with each index in the index list; and determines, based on the distance matrix, the distances between the query vector corresponding to the to-be-searched image and the center vectors corresponding to the plurality of images. The second compute engine may compute the similarities between the vectors based on the distance table and the index list, and determine an image that matches the to-be-searched image.

In another possible implementation, the second compute engine determines, based on the distance matrix, a sorting result of the distances between the query vector corresponding to the to-be-searched image and the center vectors corresponding to the plurality of images, and determines the search result. The distance matrix is used to identify distances between each segment of the to-be-searched image and corresponding segments of the center vectors. The distances between the query vector of the to-be-searched image and the center vectors may be further determined based on the distance matrix, and the distances are further sorted to finally determine the search result.

In another possible implementation, the second compute engine is specifically configured to determine the search result based on a preset threshold, where a distance between a vector associated with the image included in the search result and the query vector meets a preset condition, and the preset condition includes that the distance between the vector associated with the image and the query vector is greater than or equal to the preset threshold, or the distance between the vector associated with the image and the query vector is less than the preset threshold. In addition to obtaining the search result in the sorting manner, one or more images that meet the condition may be further determined as the search result by using the preset threshold, and the search result that matches the to-be-searched image may also be found.

In another possible implementation, the image search system is a chip or a PCIe card, and the first compute engine and the second compute engine are connected through the internal bus.

In another possible implementation, the first compute engine and the second compute engine in the compute engine set are separately logical circuits.

In another possible implementation, the image search system is a virtualized system, and the first compute engine and the second compute engine in the compute engine set are separately virtual machines or containers running on devices in the virtualized system.

In another possible implementation, the to-be-searched image is from a search request, and the search request includes at least one to-be-searched image, or the search request includes a to-be-searched video, and the to-be-searched video includes at least one frame of the to-be-searched image. In addition to image search processing, this application may also be applicable to a video search process. Each frame of image may be separately searched based on the foregoing image search process, or a search result may be quickly obtained by using the compute engine set.

According to a third aspect, this application provides an image search apparatus, and the apparatus includes modules configured to perform the image search method in the second aspect or any one of the possible implementations of the second aspect.

According to a fourth aspect, this application provides a data processing system. The data processing system includes a host system and an image search system. The host system communicates with the image search system by using a network. The host system is configured to obtain a search request, determine a search image based on the search request, and send the search image to the image search system. The image search system is configured to perform functions implemented by each compute engine in the image search system in any one of the first aspect or the possible implementations of the first aspect.

According to a fourth aspect, this application provides a computer-readable storage medium. The computer-readable storage medium stores instructions, and when the instructions are run on a computer, the computer performs the method in the foregoing aspects.

According to a fifth aspect, this application provides a computer program product that includes instructions. When the computer program product runs on a computer, the computer performs the method in the foregoing aspects.

In this application, based on implementations according to the foregoing aspects, the implementations may be further combined to provide more implementations.

## BRIEF DESCRIPTION OF DRAWINGS

FIG. 1 is a schematic flowchart of a product quantization processing method according to this application;
FIG. 2 is a schematic diagram of an architecture of a data processing system 100 according to this application;
FIG. 3 is a schematic flowchart of an image search method according to this application;
FIG. 4 is another schematic flowchart of an image search method according to this application;
FIG. 5 is a schematic flowchart of a method for computing a distance table according to this application;
FIG. 6 is another schematic flowchart of a method for computing a distance table according to this application;
FIG. 7 is a schematic flowchart of a method for computing a distance matrix according to this application;
FIG. 8 is a schematic flowchart of another method for computing a distance matrix according to this application;
FIG. 9 is a schematic flowchart of a method for computing vector accumulations according to this application;
FIG. 10 is a schematic flowchart of another method for computing a distance matrix according to this application;
FIG. 11 is a schematic diagram of a parallel processing procedure according to this application; and
FIG. 12 is a schematic diagram of an architecture of an image search apparatus 600 according to this application.

## DESCRIPTION OF EMBODIMENTS

For ease of understanding, terms in embodiments of this application are first explained.

Image search (image search) is a process of searching a gallery (which may also be referred to as a base library, a sample library, or a to-be-searched library) for an image that matches a query image input by a user. Generally, based on deep learning (deep learning) and image recognition technologies, image search searches for a same or similar image from a specified gallery by using feature vectorization and search capabilities with reference to different application services and industry scenarios. Each image in the gallery and the query image may be represented by using feature data. A vector of an image may be obtained based on a feature extraction model (for example, a deep learning feature extraction model ResNet). Feature data of one image includes at least one feature vector (which may also be referred to as a vector), and each vector may be represented by using a multidimensional array. For example, a vector 1 may be represented by using (a, b, c), and a, b, and c are floating point numbers. The image search process may also be understood as a search processing process based on feature data of an image. It should be noted that, for ease of description, in the following implementations of this application, an example in which feature data of each image is one feature vector is used for description.

A long feature is feature data of an image obtained based on a feature extraction model, and is also referred to as long feature data, or referred to as uncoded data, long coded data, or original feature data. Each image obtains a long feature.

A short feature is data obtained by decomposing a long feature after model training is performed on an artificial intelligence (artificial intelligent, AI) feature training platform, and is also referred to as short feature data, or referred to as coded data or short coded data. Generally, a product quantization (product quantization, PQ) method may be used to convert a long feature into a short feature, and the product quantization method is a method for accelerating search.

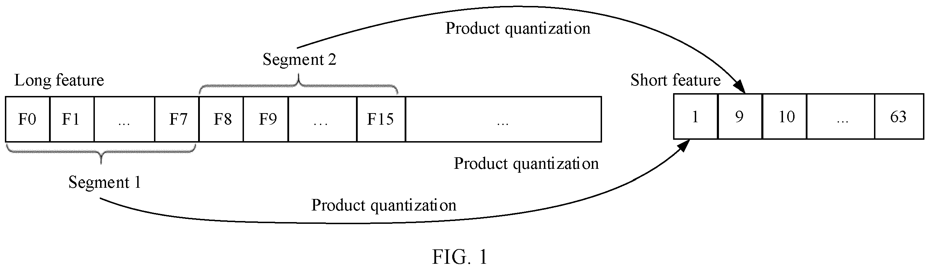

For example, FIG. 1 is a schematic flowchart of a product quantization processing method according to an embodiment of this application. As shown in the figure, a process of converting a long feature of one image into a short feature is used as an example. The long feature is first segmented, each segment has a segment sequence number, and the segment sequence number is unique in the segment. For example, a long feature including 512 dimensions is divided into 64 segments, each segment includes eight feature vectors F, and segment sequence numbers are respectively 0 to 7. Then, a feature vector that is closest to K cluster center vectors obtained through pre-training is determined in each segment by computing distances from the K cluster center vectors obtained through pre-training, and a segment sequence number of the feature vector is used as an identity of a short feature of the segment. K is a quantity of preset cluster centers, and K is a positive integer greater than or equal to 2. Specifically, the K cluster center vectors obtained through pre-training may be obtained in the following manner: K clusters are obtained by using long features of all or some images in the gallery as training data and using a clustering algorithm (for example, a K-Means algorithm), each cluster includes one cluster center, and a vector used to identify the cluster center is referred to as a cluster center vector (which may also be referred to as a center vector). For example, in a segment 1 including F0 to F7, F1 is a feature vector closest to the K cluster center vectors, and a segment sequence number 1 of F1 may be used to identify the segment 1, that is, the segment 1 may be identified by using 1 in a short feature. After distance computing and comparison are performed on each segment in the long feature, a sequence number of a feature vector in a segment may be used to identify the segment. The product quantization process may also be understood as a recording manner of simplifying a long feature of an image in a gallery. An index of an original feature is constructed by computing distances between vectors in each segment and center vectors. A set of identities that are of segments and that are used to identify long features of all images in the gallery is referred to as a short feature list (which may also be referred to as an index list), and a sequence of short features in the short feature list is the same as a segment sequence of the long features. A subsequent image search processing process is search processing performed based on the short feature.

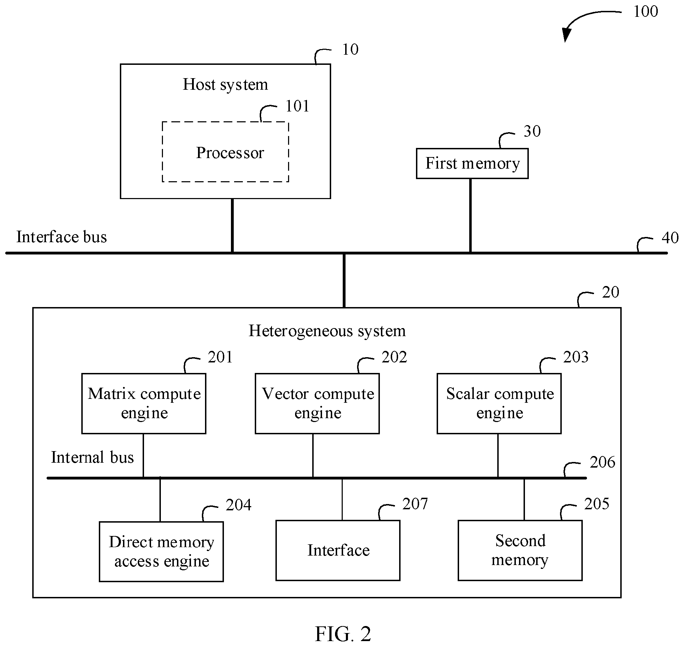

The following further describes a data processing system 100 provided in this application with reference to FIG. 2. As shown in the figure, the processing system 100 includes a host system 10, a heterogeneous system 20 (which may also be referred to as an image search system), a first memory 30, and an interface bus 40. The host system 10, the heterogeneous system 20, and the first memory 30 are connected through the interface bus 40. The interface bus 40 includes a peripheral component interconnect express (Peripheral Component Interconnect Express, PCIe), and the heterogeneous system 20 may be a chip, or may be a PCIe card.

The host system 10 is configured to provide an application programming interface (application programming interface, API) or an image search framework for an application program running in the host system 10 or another system, device, or application program outside the host system 10. The application programming interface or the image search framework is configured to: receive a search request of a user, where the search request includes a to-be-searched image; and further send the search request to the heterogeneous system 20 through the interface bus 40. The heterogeneous system 20 completes processing of the search request, for example, obtains a query vector associated with the to-be-searched image in the search request. Optionally, the host system may complete processing of the search request, to obtain the query vector associated with the to-be-searched image. In addition, the host system 10 is further configured to run an operating system. The host system 10 includes a processor 101, and the processor 101 may be a central processing unit (central processing unit, CPU).

The heterogeneous system 20 is configured to search a gallery for an image that is the same as or similar to a query image. The heterogeneous system 20 includes two or more compute engines. For example, as shown in FIG. 2, the heterogeneous system 20 includes a matrix compute engine 201, a vector compute engine 202, a scalar compute engine 203, an internal bus 206, and an interface 207. Optionally, the heterogeneous system 20 further includes a direct memory access (direct memory access, DMA) engine 204 and a second memory 205. The matrix compute engine 201, the vector compute engine 202, the scalar compute engine 203, the direct memory access (direct memory access, DMA) engine 204, the second memory 205, and the interface 207 communicate with each other through the internal bus 206. The internal bus 206 may be a parallel bus, and is configured to implement point-to-point (point-to-point, P2P) communication. The heterogeneous system 20 may alternatively include a PCIe or a front side bus (front side bus, FSB), or may be in another form that can implement connection of components.

For ease of description, the matrix compute engine 201 may also be referred to as a first compute engine, the vector compute engine 202 and the scalar compute engine 203 may be referred to as a second compute engine, the direct memory access engine 204 may be referred to as a third compute engine, and the second memory 205 may be referred to as a shared memory.

In a possible embodiment, the first memory 30 and the second memory 205 are two different memories. Optionally, the first memory 30 and the second memory 205 may alternatively be different memories that establish a mapping relationship by using a memory mapping input/output (memory mapped input/output, MMIO) technology. Alternatively, the first memory 30 and the second memory 205 may be a same memory.

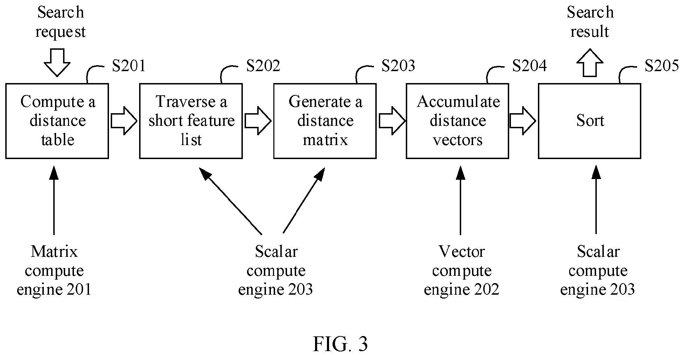

The matrix compute engine 201 is configured to implement processing of matrix-related computing, including matrix multiplication and other matrix-related computing processes, for example, S201 computing a distance table in FIG. 3. The vector compute engine 202 is configured to implement vector-related computing, including a vector-related computing process such as vector accumulation, for example, S204 accumulating distance vectors, to obtain a distance result between the vectors in FIG. 3. The scalar compute engine 203 is configured to implement scalar-related computing, including operations of querying a short feature list and a distance table, to generate a distance matrix, and sorting results obtained after matrix distance computing, for example, S202 traversing a short feature list, S203 generating a distance matrix, and S205 sorting in FIG. 3, where a scalar is a quantity that has only magnitude and no direction. The direct memory access engine 204 is configured to load the short feature list from the first memory 20 to the second memory 205 by using a direct memory access technology, so that each compute engine in the heterogeneous system can quickly obtain content in the short feature list, to complete a corresponding processing operation. The second memory 205 is configured to provide a storage area in a shared form for the matrix compute engine 201, the vector compute engine 202, the scalar compute engine 203, and the direct memory access engine 204.

The matrix compute engine 201, the vector compute engine 202, the scalar compute engine 203, and the direct memory access engine 204 may be separately implemented by hardware circuits with specific functions. For example, each compute engine includes a chip or a circuit structure constructed by electronic components, and is configured to perform computing processing on data. In this embodiment, the matrix compute engine 201 is used as an example for description. The matrix compute engine 201 has universality and programmability of a CPU, but is more dedicated, and can efficiently perform related computing, for example, matrix-related computing. The matrix compute engine 201 may be replaced with a processing chip such as a graphics processing unit (graphics processing unit, GPU) or an embedded neural-network processor (neural-network processing units, NPU).

Optionally, the matrix compute engine 201, the vector compute engine 202, the scalar compute engine 203, and the direct memory access engine 204 may be implemented by using software modules, or may be formed by mixing software and hardware. Optionally, the compute engines may also be integrated or partially integrated. For example, the matrix compute engine 201, the vector compute engine 202, and the vector compute engine 203 are integrated and deployed, to implement processing of matrix computing and vector computing.

In a possible embodiment, the heterogeneous system shown in FIG. 2 may also be implemented by software. For example, the heterogeneous system is a virtual system. The matrix compute engine 201, the vector compute engine 202, the scalar compute engine 203, and the direct memory access engine 204 may be implemented by virtualized compute devices such as virtual machines or containers. In this case, the heterogeneous system is connected to the host system through a network, and the network may implement communication between the heterogeneous system and the host system in a form of an Ethernet, a fiber network, a wireless network, or the like. The virtual system includes one or more devices, and each device includes a logic circuit or device that is respectively configured to implement a corresponding computing function. For example, the device may include the PCIe card or chip. In this case, each compute engine is implemented by one or more virtual machines or containers obtained after the device with the PCIe card or chip is virtualized. For example, the virtual system includes a device with a component that implements a function of a matrix compute engine (for example, a GPU). After resources of the device are virtualized, a plurality of virtual machines or containers with virtual graphics processing units (virtual GPU, vGPU) are obtained, and each virtual machine or container is respectively configured to implement the function of each compute engine.

For ease of description, in the following embodiments, the data processing system 100 shown in FIG. 2 is used as an example to further explain an image search method provided in this application. The heterogeneous system 20 may obtain the to-be-searched image from the host system 10 through the interface 207, determine similarities between the to-be-searched image and the images in the gallery, and then determine a search result of the to-be-searched image based on a similarity computing result. In the foregoing image search process, the heterogeneous system 20 may adopt an idea of "dedicated people are assigned for dedicated work". Refer to FIG. 3. In the heterogeneous system 20, different types of compute engines are used to separately perform operations S201 computing a distance table, S202 traversing a short feature list, S203 generating a distance matrix, S204 accumulating distance vectors, and S205 sorting, to determine the search result. The search result includes an image (also referred to as a target image) similar to the to-be-searched image. In this way, different compute engines are separately used to perform processing processes for different types of computing operations, thereby improving data processing efficiency.

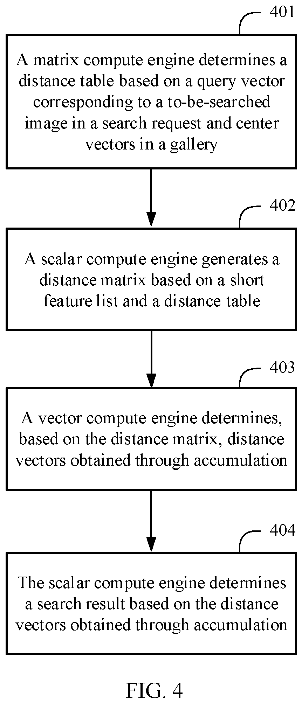

With reference to the accompanying drawings, the following further describes the image search method provided in this application. FIG. 4 is a schematic flowchart of the image search method provided in this application. As shown in the figure, the method includes the following steps.

S401: A matrix compute engine determines a distance table based on a query vector corresponding to a to-be-searched image in a search request and center vectors in a gallery.

To increase a search speed of massive data, before image search is performed, another device or system other than the host system 10 or the system 100 shown in FIG. 2 obtains a long feature of an image in the gallery in advance by using a feature extraction model; and obtains K cluster centers by using all or some data in the gallery as training samples and using a clustering algorithm, where each cluster center includes one center vector (which may also be referred to as a product quantization cluster center vector), each center vector includes vectors that have a same quantity as segments of the long feature, and each vector may be represented by a multidimensional array. For example, as shown in FIG. 4, after product quantization and clustering processing are performed on the long feature of the image in the gallery, K center vectors 1 to K are obtained, where each center vector includes M segments, and M is the quantity of the segments of the long feature. For example, the center vector 1 includes a vector 11 to a vector 1M. Then, with reference to the process shown in FIG. 1, product quantization processing is performed on the long feature of the image in the gallery, to create a short feature list.

When the search request is obtained, the to-be-searched image in the search request may be first obtained, and then a preprocessing operation is performed on the to-be-searched image. The preprocessing operation includes: obtaining a long feature of the to-be-searched image by using a feature extraction model that is the same as that of a preprocessing process of the image in the gallery, and then dividing the long feature of the to-be-searched image into M segments, where M is the same quantity of the segments of the long feature when product quantization processing is performed in the gallery. For example, in FIG. 4, a query vector 1 is divided into a vector 1 to a vector M.

It should be noted that the preprocessing process of the searched image may be performed by a heterogeneous system, or may be performed by a host system or another device or system, and a preprocessing result is sent to the heterogeneous system, and the heterogeneous system further processes the image. In addition, a specific processing process of the clustering processing and the feature extraction model is not limited in this application. During specific implementation, an appropriate algorithm may be selected based on a service requirement to perform clustering and image feature extraction processing.

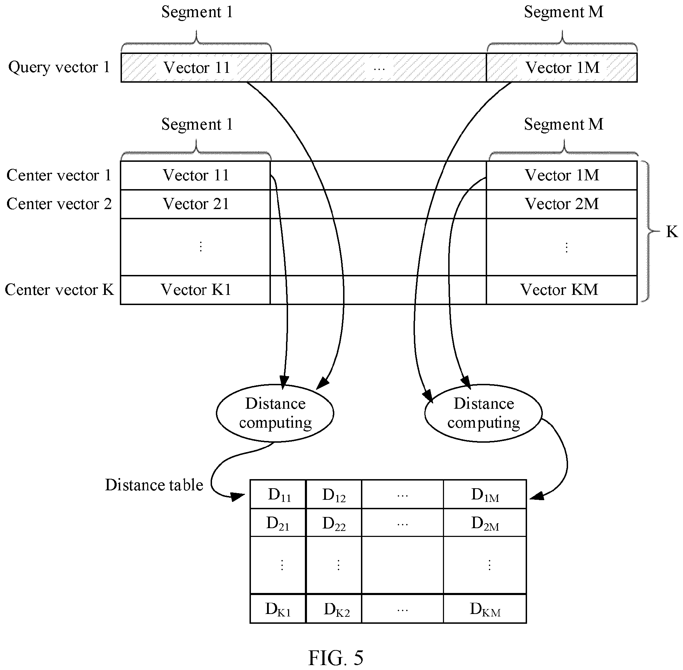

Further, to determine a vector similar to the query vector in the gallery, a similarity between the query vector and each center vector in the gallery needs to be determined. Specifically, each segment in the query vector may be separately used as a search object, and distances between a vector of the segment corresponding to the search object and vectors of corresponding segments in the K center vectors are computed, to obtain the distance table based on distance computing results. For example, FIG. 5 is a schematic flowchart of a distance computing method according to an embodiment of this application. As shown in the figure, a distance between a vector 11 of a segment 1 of the query vector 1 and a vector 11 of a segment 1 of the center vector 1 is computed to obtain $D_{11}$, and $D_{11}$ is used to indicate a distance between the vector 11 indicated by the segment 1 of the query vector 1 and the vector 11 indicated by the segment 1 of the center vector 1.

Specifically, a distance between two vectors may be computed in any one of the following manners:

Manner 1: The following formula 1 may be used to compute the distance between two vectors:

$$\text{Dist} = \sum_{k=1}^{n} (X_{1k} - X_{2k})^2$$

where $X_1$ is a query vector, $X_{1k}$ is a $K^{th}$ segment vector of the query vector, $X_2$ is a to-be-compared center vector in the gallery, $X_{2k}$ is a $K^{th}$ segment in the center vector, a value of K is an integer ranging from 1 to n, and n is a positive integer greater than 1.

Manner 2: Based on the formula 1, square root calculation is further performed on both sides of the equal sign of the formula 1, that is, the distance between two vectors is computed by using the following formula 2:

$$\text{Dist} = \sqrt{\sum_{k=1}^{n} (X_{1k} - X_{2k})^2}$$

Manner 3: Square root calculation may be further removed from the formula 2, and the distance between two vectors is computed by using the following formula 3:

$$\text{Dist} = \sum_{k=1}^{n} X_{1k}^2 + \sum_{k=1}^{n} X_{2k}^2 - 2 \times \sum_{k=1}^{n} X_{1k}X_{2k}$$

Manner 4: Because the first item in the formula 2 is an accumulation result of vectors corresponding to all segments of the query vector, in a process of computing a distance between a vector indicated by any segment of the query vector and a vector of any segment of the center vector, a value of the first item is the same. In a distance computing process, the value may also be understood as a constant, that is, a computing result of the item is included in a distance computing process of any two vectors. Therefore, to simplify the computing process, the item may be removed from the distance computing formula. Specifically, the following formula 4 may be used to compute the distance between two vectors:

$$\text{Dist} = \sum_{k=1}^{n} X_{2k}^2 - 2 \times \sum_{k=1}^{n} X_{1k}X_{2k}$$

Further, to simplify a distance computing processing process, a computing process of the formula may alternatively be converted into a matrix computing process, to perform matrix computing by using a matrix compute engine, thereby avoiding a delay and efficiency problem caused by obtaining data one by one and performing a computing operation.

Specifically, the query vector is converted into a row matrix based on segment sequence numbers. For example, the vectors corresponding to the segments of the query vector are separately used as row elements in a first matrix based on the segment sequence numbers in the query vector. The center vector is converted into a column matrix based on segment sequence numbers. For example, vectors corresponding to segments of each center vector are separately used as elements of a column in a second matrix based on segment sequence numbers in each center vector. Further, the matrix compute engine performs matrix-related computing operations, thereby improving data processing efficiency. For ease of description, the row matrix may also be referred to as the first matrix, and the column matrix may also be referred to as the second matrix.

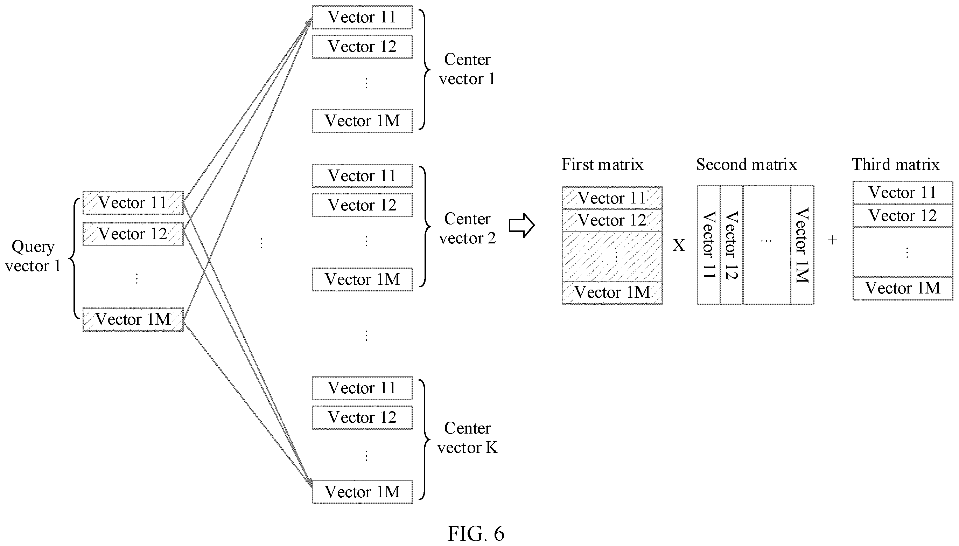

For example, refer to FIG. 6. A matrix mapping process of a query vector 1 and a center vector 1 is used as an example. First, based on a segment sequence number of the query vector 1, a vector of each segment of the query vector 1 is respectively used as an element of a row in a first matrix. For example, a query vector 11 is used as an element of a first row in a first matrix, ..., and so on. The first matrix is a matrix of M* 1, and each segment is used as the element of the row in the first matrix. Based on a segment sequence number of the center vector 1, a vector of each segment of the center vector 1 is respectively used as an element of a column of a second matrix, ..., and so on. The second matrix is a column matrix of 1*M, and each segment is respectively used as the element of the column of the second matrix. In this case, when a distance between the query vector 1 and the center vector 1 is computed by using the foregoing formula 4, a multiplication operation on the first matrix and the second matrix may be performed, and then a result of matrix multiplication is multiplied by 2, so as to obtain a result of the second item in the formula 4. Further, the first item in the formula 4 is an accumulation operation on each segment of the center vector 1. A result of the first item may be computed in advance, an accumulated sum of vectors with same segment sequence numbers of all center vectors is obtained, and each accumulated sum is used as a column element of a third matrix. Further, the computing process of the foregoing formula 4 is converted into multiplying the first matrix and the second matrix shown in FIG. 5, and then a result obtained by multiplying the first matrix and the second matrix is accumulated with the third matrix, so as to obtain a distance computing result of the formula 4.

It should be noted that, the third matrix in FIG. 6 may also be referred to as a shift matrix. Although in FIG. 5, the result of the distance formula is obtained by adding the third matrix to the result of multiplying the first matrix and the second matrix, in specific implementation, to simplify a computing process and improve data processing efficiency, all elements in a matrix obtained thorough matrix multiplication may be multiplied by -1, and then added with the third matrix, so as to obtain a processing result of the formula 4.

Optionally, in addition to the foregoing formula 4, the formula 1 to the formula 3 may also adopt a similar idea. Each vector is used as a row element or a column element of a matrix based on a segment sequence number, so that a distance computing process is converted into a matrix computing process, and a matrix compute engine is used to perform the foregoing matrix multiplication and addition operations, thereby improving a processing speed of matrix computing.

Based on any one of the foregoing manners, a distance computing result of any two vectors may be obtained. Further, the distance computing result may be stored by using a distance table shown in FIG. 5. $D_{11}$ is used to indicate a distance computing result between the vector 11 indicated by the segment 1 of the query vector 1 and the vector 11 indicated by the segment 1 of the center vector 1, $D_{21}$ is used to indicate a distance computing result between a vector 11 indicated by a segment 2 of the query vector 1 and a vector 21 indicated by a segment 2 of a center vector 2, ..., and so on. The distance table includes distance computing results of vectors indicated by segments of the query vector and vectors of corresponding segments of center vectors.

After generating the distance table, the matrix compute engine may store the distance table in the second memory 205 of the heterogeneous system 20, and send a notification to the scalar compute engine, so that the scalar compute engine performs subsequent operations. When the distance table is stored in the second memory 205, the scalar compute engine 202 may directly read the distance table through the second memory 205, so as to generate the distance matrix. For a specific process, refer to steps S402 and S403.

Because a computing process of the distance table mainly relates to the distance computing process of the matrices, the matrix compute engine may directly process the distance computing process through matrix computing, and the distance computing process can be completed more quickly. In addition, the matrix compute engine supports floating-point running, and does not need to perform a conversion operation between a floating-point number and a fixed-point number as a CPU does when the CPU performs distance computing, thereby simplifying a data processing process. In addition, by optimizing a distance computing method, a distance between any two vectors can be quickly determined, so as to determine a similarity between the vectors, thereby further improving image search efficiency.

S402: The scalar compute engine generates the distance matrix based on the short feature list and the distance table.

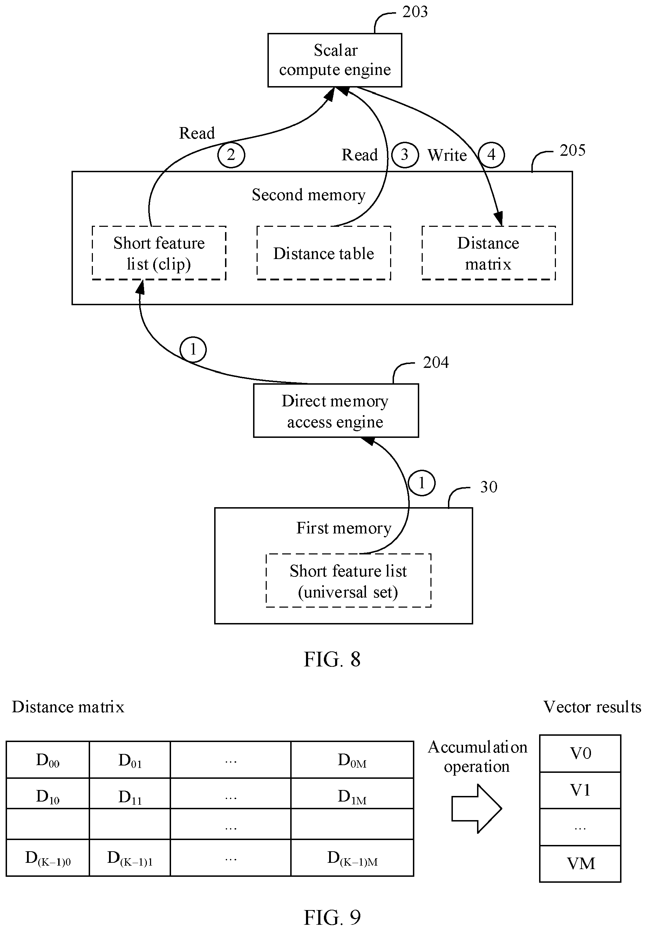

The short feature list is usually generated in a process of creating the gallery, and is stored in the first memory 30 shown in FIG. 1. As shown in FIG. 8, in the image search process, before generating the distance matrix, the scalar compute engine may notify the direct memory engine 204 to load the short feature list of the gallery to the second memory 205 of the heterogeneous system 20, so that the scalar compute engine traverses short features of the short feature list one by one, obtains a distance value by querying the distance table based on an identity of each segment in the short feature list, and then writes the distance value into a corresponding location of the distance matrix, to finally obtain the distance matrix. The distance matrix may be stored in the second memory of the heterogeneous system.

It should be noted that the distance matrix is a logical structure for storing data. In a specific implementation, storage space of a specified size may be divided in the second memory 205, and the storage space is used to store the distance matrix. For example, a specified storage space 1 is used to store data of $D_{11}$, and a specified storage space 2 is used to store data of $D_{12}$.

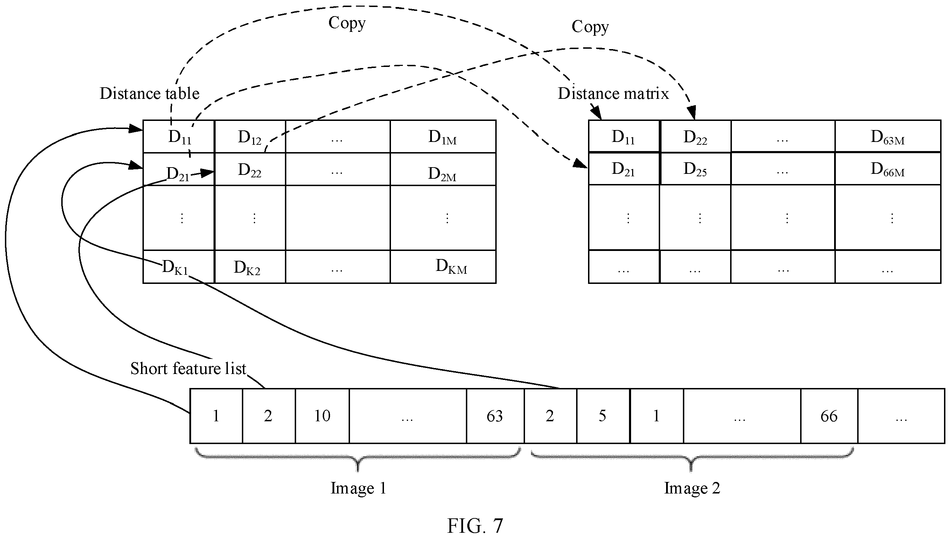

For example, as shown in FIG. 7, the short feature list includes short features of all images in the gallery, and distance values corresponding to short feature sequence numbers of each image may be used as one row of elements in the distance matrix. For example, if an image 1 includes 64 sequence numbers, and an identity of the 1st short feature is 1, the distance value $D_{11}$ in the 1st row and the 1st column in the distance table may be used as an element in the 1st row and the 1st column of the distance matrix. Similarly, the 2nd short feature identity of the image 1 is 2. In this case, a distance value $D_{22}$ in the 2nd row and the 2nd column in the distance table may be used as an element in the 2nd row and the 2nd column of the distance matrix, ..., and so on. Elements in one row of the distance matrix represent distance values of one image, so as to obtain an N*M matrix, where N is a quantity of the images included in the short feature list, and M is a quantity of segments of a long feature.

Optionally, the direct memory engine may load all or a part of the short feature list to the second memory 205 of the heterogeneous system 20 based on a size of remaining space in the second memory 205.

The second memory 205 may be set by using a storage medium having a high read/write speed and a low delay, for example, a static random access memory (static random access memory, SRAM). The scalar compute engine may directly read the short feature list and the distance table through the second memory, so as to avoid a data transmission delay caused by reading data from the first memory. In addition, in a conventional technology, a CPU first loads a short feature list to a memory, and data that is frequently accessed is loaded to a cache of the CPU. However, because cache space is limited, the entire short feature list cannot be loaded to the cache. In a generation process of a distance matrix, data in the short feature list and a distance table needs to be frequently read. Consequently, a problem that to-be-read data does not exist in the cache (also referred to as a cache miss problem) is caused, thereby affecting a data reading speed. However, in this application, the second memory 205 is added to the heterogeneous system, the short feature list is loaded to the second memory 205, and the scalar compute engine is connected to the second memory through the internal bus, so that frequent migration is not required in a data processing process. In addition, the identities in the short feature list are not identified in an order of segments, but elements are sequentially written row-by-row in the matrix, and the distance table and the short feature list are separately stored in the second memory 205 of the heterogeneous system. Therefore, the foregoing process may be understood as a process of randomly reading the distance table and sequentially writing the distance matrix. The short feature list is stored in the second memory, so that a speed of reading data in the short feature list can be further improved, and processing efficiency of an image search process can be further improved.

After generating the distance matrix, the scalar compute engine may notify the vector compute engine to continue to perform a distance accumulation operation. For details, refer to step S403.

S403: The vector compute engine determines, based on the distance matrix, distance vectors obtained through accumulation.

Each row in the distance matrix obtained in step S402 has several distance values, and each distance value represents a distance between a vector corresponding to a segment of a query vector and a vector of a segment corresponding to a center vector in the gallery. An accumulation operation needs to be performed on all distances in a same row, so that a distance between the query vector and the same center vector in the gallery can be obtained.

As shown in FIG. 9, the vector compute engine may implement an accumulation operation of a plurality of floating-point numbers by using one accumulation instruction. However, in a processing process of the conventional technology, the accumulation operation involves a large amount of processing of floating-point accumulation computing. If a gallery includes 100 million vectors, 100 million times of accumulation operations are generated, and each time of accumulation operation involves M (a PQ segment quantity) elements. Performing the vector accumulation operation directly by using the vector compute engine greatly accelerates vector accumulation.

S404: The scalar compute engine determines a search result based on the distance vectors obtained through accumulation.

The scalar compute engine may first sort the distance vectors obtained through accumulation, and then select, based on a sorting result, at least one image that matches the query vector as the search result.

A sorting method may be top X sorting, that is, X distance results are selected from the distance vectors in descending order, where X is a positive integer greater than or equal to 1, and a specific value of X may be manually specified. Specifically, in a process of sorting the distance results obtained through accumulation, the top X distance vectors may be screened by using a binary heap. For example, the scalar compute engine may divide to-be-sorted data into at least two groups, then sort the to-be-sorted data in each group based on magnitudes, and finally perform secondary sorting on sorting results of different groups, so as to select, from a final sorting result, at least one distance vector obtained through accumulation as the search result.

Further, the heterogeneous system may further determine an associated image in the gallery based on the search result of the query vector. Specifically, because the short feature list is generated based on the images in the gallery, as shown in FIG. 7, the short feature list may record relationships between short feature identities and the images in the gallery. Therefore, image identities may also be added to the distance matrix generated based on the short feature list and the distance table. For example, in the distance matrix shown in FIG. 9, a field of an identity of an image may be added to each vector. Correspondingly, the distance results obtained through accumulation each may also carry a field used to identify an image. When the distance vectors obtained through accumulation are determined in a manner such as top X sorting, an identity of a matched image may be determined based on a field of the image, so as to obtain the matched image from a memory that stores the image in the gallery, then, the matched image is presented to a user as the search result of a to-be-searched image.

In a possible embodiment, after the heterogeneous system obtains the sorting result, the direct memory access engine may migrate the sorting result to the first memory, so that the host system searches, based on the sorting result, for an image in a gallery associated with the sorting result as the search result, and presents the search result of the search request to the user by using an interface or a web (web) interface.

It should be noted that, the images in the gallery may be stored in the image search system shown in FIG. 1, for example, stored by using the first memory 30 of the host system 10, or may be stored by using a device outside the system. When the search result of the query vector of the to-be-searched image is determined, the matched image may be obtained from the device outside the system based on the identity of the image indicated in the search result.

In a possible embodiment, after the distance matrix is generated in step S301, the image search process may be performed in a multi-level parallel processing manner. Specifically, the following two manners may be used to perform a parallel processing operation:

Manner 1: A plurality of query requests are processed in parallel.

When obtaining the plurality of query requests, the heterogeneous system may separately execute the query requests in parallel based on the foregoing step S301 to step S304. In this case, because a process of each query request is relatively independent, each compute engine in the heterogeneous system may use a plurality of processor cores, processes, or threads to simultaneously perform processes of processing the plurality of query requests, thereby implementing parallel processing of the plurality of query requests.

Manner 2: A same query request is processed in parallel.

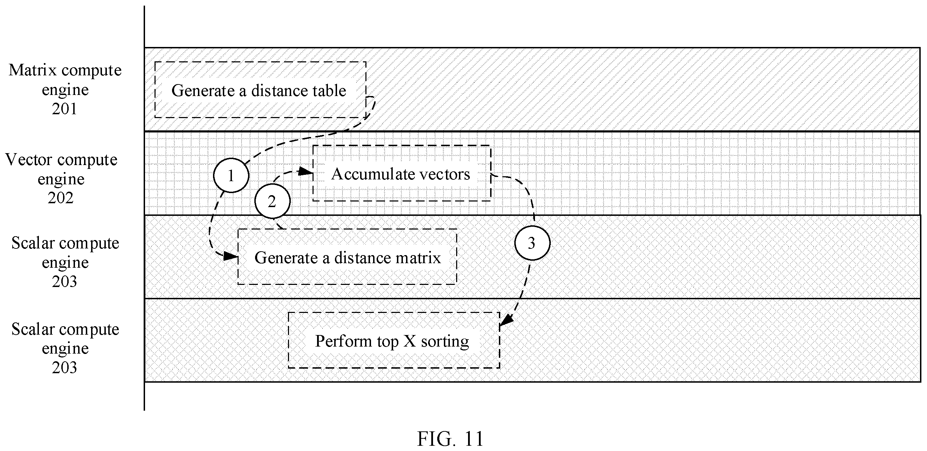

For a same query request, processing capabilities of the matrix compute engine, the vector compute engine, and the scalar compute engine may be determined based on statistical data, to perform parallel processing. Specifically, refer to FIG. 11. FIG. 11 is a schematic diagram of a parallel processing procedure. As shown in the figure, after the matrix compute engine generates the distance table, when generating a part of the distance matrix, the scalar compute engine may accumulate the part of the distance matrix to obtain accumulated distance vectors, and then the scalar compute engine performs top X sorting on the accumulated distance vectors to obtain a sorting result of the part of the distance matrix. The foregoing process may be referred to as an iterative processing process based on a part of the distance matrix. For a processing process of a same distance matrix, an iterative processing process of the distance matrix may be divided into two or more sub-processes, and the foregoing iterative processing process based on a part of the distance matrix is separately performed in each process. For a plurality if iterative processing processes based on a part of the distance matrix, a final result of the distance matrix may be determined by updating sorting results merely in a sorting stage. For example, the sorting result may be stored in a stack form. Each time an iterative processing process based on a part of the distance matrix is completed, the sorting result in the stack is updated to obtain a latest sorting result, until all processing processes of the distance matrix is completed.

Optionally, as shown in FIG. 9, the distance compute engine 201 may divide the gallery into several groups, and then sequentially compute distances between each segment of the query vector and center vectors corresponding to each group in the gallery, so as to generate a distance subtable of the distance table, where some data of the distance table is referred to as the distance subtable. Next, the scalar compute engine 203 generates a distance matrix based on the distance subtable. Then, the vector compute engine 202 determines, based on the distance matrix, distance results obtained through accumulation, and the scalar compute engine 203 determines a sorting order of the distance vectors based on the distance vectors obtained through accumulation. Each time the distance compute engine 201 generates a distance subtable, the scalar compute engine 203 and the vector compute engine 202 sequentially perform a corresponding processing process based on the foregoing process, until processing of the entire distance table is completed. In the sorting process, X vectors may be determined based on a form similar to a first in first out stack. Each time X new vectors are obtained, the X new vectors are compared with the vectors in the stack. If there is a vector with a smaller distance in the newly obtained X vectors, the vectors in the original stack are replaced. In the foregoing implementation, fine-grained segmentation may be performed on data, so that distance matrix generation, vector accumulation, and sorting may be performed simultaneously, thereby further improving image search efficiency.

According to the description of the foregoing process, in the image search method provided in this application, the idea of "dedicated people are assigned for dedicated work" is adopted, and image search processing is performed by using the heterogeneous system including a plurality of dedicated compute engines, to avoid a problem of a slow image search speed caused by image search processing performed by a CPU. Further, in a process of computing the distance between the vectors, a plurality of computing manners are further provided to simplify the processing processes of distance computing. In addition, by mapping the distance computing process to the matrix computing process, the vector computing processing process may be quickly completed by using the matrix compute engine, thereby further improving image search processing efficiency, and shortening a data processing delay. In addition, the shared memory is added to the heterogeneous system, and the distance table and the short feature list are stored by using the shared memory, so that the cache miss problem can be avoided, and data processing efficiency can be improved. On the other hand, in the image search process, the plurality of query requests or different steps in the same query request may be executed in parallel based on processing capabilities of the compute engines in the heterogeneous system, to further shorten a processing delay of image search and meet a requirement of real-time image search.

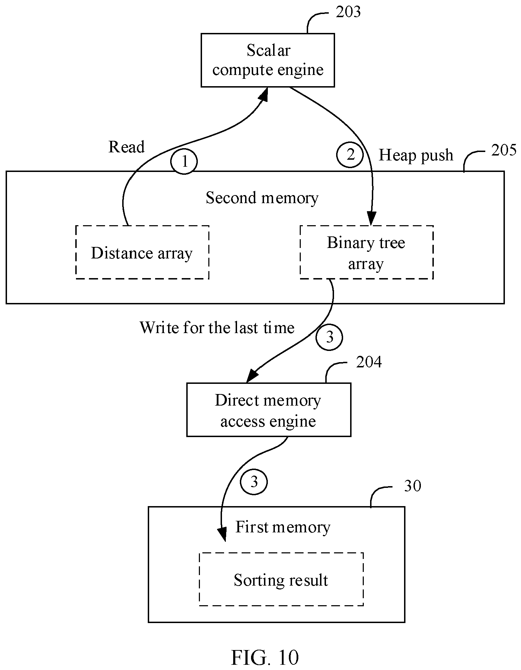

In a possible embodiment, in addition to being applied to image search, the foregoing method in this application may be further applied to scenarios such as video search, facial recognition, and text search. In the video search scenario, search processing may be performed on each frame of image by using the method in FIG. 3 to FIG. 11, to obtain a search result. In this way, search results including all frames are used as a search result, and video search processing may also be quickly completed. In addition, for a face recognition scenario, the foregoing image search method may also be used. An image of a to-be-searched face is used as a to-be-searched image. Further performing the method in FIG. 3 to FIG. 11 may also implement a process of quickly obtaining a matched image.

It should be noted that, for brief description, the foregoing method embodiments are represented as a series of actions. However, a person skilled in the art should know that this application is not limited to the described order of the actions. In addition, a person skilled in the art should also know that all the embodiments described in this specification belong to example embodiments, and the related actions are not necessarily mandatory to this application.

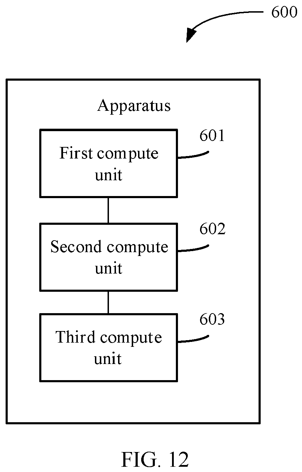

With reference to FIG. 1 to FIG. 11, the foregoing describes in detail the image search method according to embodiments of this application. With reference to FIG. 12, the following describes an image search apparatus according to an embodiment of this application.

FIG. 12 is a schematic diagram of a structure of an image search apparatus 600 according to this application. As shown in the figure, the apparatus 600 includes a first compute unit 601 and a second compute unit 602, where

the first compute unit 601 is configured to compute similarities between a to-be-searched image and a plurality of images included in a gallery; and

the second compute unit 602 is configured to determine a search result based on the similarities between the to-be-searched image and the plurality of images included in the gallery, where the search result includes whether the gallery includes a target image similar to the to-be-searched image.

It should be understood that the first compute unit 601 in the apparatus 600 in this embodiment of this application may correspond to the implementation of the matrix compute engine 201 in FIG. 2, and the second compute unit 602 may correspond to the implementation of the vector compute engine 202 and the scalar compute engine 203 in FIG. 2. Alternatively, the first compute unit 601 and the second compute unit 602 may implement, by using software, the image search method shown in FIG. 3 to FIG. 11, and the apparatus 600 and modules of the apparatus 600 may alternatively be software modules. For example, a GPU invokes instructions in a memory to separately implement functions of the first compute unit 601 and the second compute unit 602. Optionally, when the first compute unit 601 and the second compute unit 602 are implemented by using software, a CPU or another type of processor may invoke computer instructions in a memory to implement functions of the first compute unit and the second compute unit respectively. The processor includes a digital signal processor (digital signal processing, DSP), an application-specific integrated circuit (application-specific integrated circuit, ASIC), a field-programmable gate array (field-programmable gate array, FPGA) or other programmable logic devices, discrete gates or transistor logic devices, discrete hardware components, and the like. The general-purpose processor may be a microprocessor or any conventional processor or the like.

Optionally, the similarities between the to-be-searched image and the plurality of images included in the gallery are obtained based on distances between a query vector corresponding to the to-be-searched image and center vectors corresponding to the plurality of images. Alternatively, the similarities between the to-be-searched image and the plurality of images included in the gallery are the distances between the query vector corresponding to the to-be-searched image and the center vectors corresponding to the plurality of images.

Optionally, the first compute unit 601 is further configured to: convert the query vector into a query matrix, convert the center vectors into center matrices, and obtain a distance table based on the query matrix and the center matrices, where the distance table is used to determine the distances between the query vector corresponding to the to-be-searched image and the center vectors corresponding to the plurality of images.

Optionally, the apparatus 600 further includes a shared memory (not shown in FIG. 6), and the second compute unit 602 is further configured to: obtain the distance table from the shared memory, and determine, based on the distance table, whether the gallery includes the target image similar to the to-be-searched image.

Optionally, the apparatus 600 further includes a third compute unit 603, configured to: obtain an index list corresponding to the images in the gallery, and the second compute engine is specifically configured to: obtain the distance table from the shared memory, and determine, based on the distance table, whether the gallery includes the target image similar to the to-be-searched image.

The second compute unit 602 is further configured to: obtain a distance matrix based on the distance table and the index list, where the distance matrix is used to indicate a distance value associated with each index in the index list; and determine, based on the distance matrix, the distances between the query vector corresponding to the to-be-searched image and the center vectors corresponding to the plurality of images.

Optionally, the second compute unit 602 is further configured to: determine, based on the distance matrix, a sorting result of the distances between the query vector corresponding to the to-be-searched image and the center vectors corresponding to the plurality of images, and determine a search result.

Optionally, the second compute unit 602 is further configured to determine the search result based on a preset threshold, where a distance between a vector associated with the image included in the search result and the query vector meets a preset condition, and the preset condition includes that the distance between the vector associated with the image and the query vector is greater than or equal to the preset threshold, or the distance between the vector associated with the image and the query vector is less than the preset threshold.

Optionally, the to-be-searched image is from a search request, and the search request includes at least one to-be-searched image. Alternatively, the search request includes a to-be-searched video, and the to-be-searched video includes at least one frame of the to-be-searched image.

The apparatus 600 according to this embodiment of this application may correspondingly perform the method described in embodiments of this application. In addition, the foregoing and other operations and/or functions of each unit of the apparatus 600 are separately for implementing each of the corresponding procedures of the method in FIG. 3 to FIG. 11. For brevity, details are not described herein again.

According to the apparatus 600 provided in this application, a plurality of compute units may be used to separately perform different data processing processes, thereby improving data processing efficiency. In a process of calculating the distance between the vectors, a plurality of computing manners are employed to simplify the processing processes of distance computing. In addition, the apparatus 600 may further map a distance computing process to a matrix computing process, and quickly complete a distance computing processing process by using the first compute unit, thereby further improving image search processing efficiency and shortening a data processing delay. In addition, in the image search process, a plurality of query requests or different steps in a same query request may be executed in parallel based on processing capabilities of the compute engines in the heterogeneous system, to further shorten a processing delay of image search and meet a requirement of real-time image search.

This application further provides an image search system. The image search system is a heterogeneous system 20 shown in FIG. 1. The heterogeneous system 20 is configured to implement functions of corresponding procedures in the method in FIG. 3 to FIG. 11. For brevity, details are not described herein again.

This application further provides a data processing system. The data processing system includes the host system 10 and the heterogeneous system 20 shown in FIG. 1. The host system is configured to obtain a search request, and send a to-be-searched image in the search request to the heterogeneous system, so that the heterogeneous system performs functions of corresponding procedures of the method in FIG. 3 to FIG. 11. For brevity, details are not described herein again.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, all or some of the processes or the functions according to embodiments of this application are generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive (solid state drive, SSD).

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1. An image search system, comprising an interface and a compute engine set, wherein

   the interface is configured to obtain a to-be-searched image; and
   the compute engine set comprises a first compute engine and a second compute engine, wherein
   the first compute engine is configured to compute similarities between the to-be-searched image and a plurality of images comprised in a gallery; and
   the second compute engine is configured to determine a search result based on the similarities between the to-be-searched image and the plurality of images comprised in the gallery, wherein the search result comprises a target image similar to the to-be-searched image.

2. The system according to claim 1, wherein the similarities between the to-be-searched image and the plurality of images comprised in the gallery are obtained based on distances between a query vector corresponding to the to-be-searched image and center vectors corresponding to the plurality of images, or the similarities between the to-be-searched image and the plurality of images comprised in the gallery are the distances between the query vector corresponding to the to-be-searched image and the center vectors corresponding to the plurality of images.

3. The system according to claim 2, wherein the first compute engine is specifically configured to: convert the query vector into a query matrix, convert the center vectors into center matrices, and obtain a distance table based on the query matrix and the center matrices, wherein the distance table is used to determine the distances between the query vector corresponding to the to-be-searched image and the center vectors corresponding to the plurality of images.

4. The system according to claim 3, wherein the system further comprises a shared memory, and the shared memory is connected to the first compute engine through an internal bus; and

the first compute engine is further configured to store the distance table in the shared memory through the internal bus.

5. The system according to claim 4, wherein the shared memory is connected to the second compute engine through the internal bus; and
the second compute engine is specifically configured to: obtain the distance table from the shared memory, and determine, based on the distance table, whether the gallery comprises the target image similar to the to-be-searched image.

6. The system according to claim 5, wherein the system further comprises a third compute engine, and the third compute engine is configured to obtain an index list corresponding to the images in the gallery; and
the second compute engine is specifically configured to: obtain a distance matrix based on the distance table and the index list, wherein the distance matrix is used to indicate a distance value associated with each index in the index list; and determine, based on the distance matrix, the distances between the query vector corresponding to the to-be-searched image and the center vectors corresponding to the plurality of images.

7. The system according to claim 6, wherein
the second compute engine is specifically configured to: determine, based on the distance matrix, a sorting result of the distances between the query vector corresponding to the to-be-searched image and the center vectors corresponding to the plurality of images, and determine a search result.

8. The system according to claim 6, wherein
the second compute engine is specifically configured to determine the search result based on a preset threshold, wherein a distance between a vector associated with the image comprised in the search result and the query vector meets a preset condition, and the preset condition comprises that the distance between the vector associated with the image and the query vector is greater than or equal to the preset threshold, or the distance between the vector associated with the image and the query vector is less than the preset threshold.

9. The system according to any one of claims 1 to 8, wherein the system is a chip or a PCIe card, and the first compute engine and the second compute engine are connected through the internal bus.

10. The system according to claim 9, wherein the first compute engine and the second compute engine in the compute engine set are separately logic circuits.

11. The system according to any one of claims 1 to 8, wherein the system is a virtualized system, and the first compute engine and the second compute engine in the compute engine set are separately virtual machines or containers running on devices in the virtualized system.

12. The system according to any one of claims 1 to 11, wherein the to-be-searched image is from a search request, and the search request comprises at least one to-be-searched image; or the search request comprises a to-be-searched video, and the to-be-searched video comprises at least one frame of the to-be-searched image.

13. An image search method, wherein the method is applicable to an image search system, the image search system comprises an interface and a compute engine set, the compute engine set comprises a first compute engine and a second compute engine, and the method comprises:

computing, by the first compute engine, similarities between a to-be-searched image and a plurality of images comprised in a gallery; and
determining, by the second compute engine, a search result based on the similarities between the to-be-searched image and the plurality of images comprised in the gallery, wherein the search result comprises whether the gallery comprises a target image similar to the to-be-searched image.

14. The method according to claim 13, wherein the similarities between the to-be-searched image and the plurality of images comprised in the gallery are obtained based on distances between a query vector corresponding to the to-be-searched image and center vectors corresponding to the plurality of images, or the similarities between the to-be-searched image and the plurality of images comprised in the gallery are the distances between the query vector corresponding to the to-be-searched image and the center vectors corresponding to the plurality of images.

15. The method according to claim 14, wherein the computing, by the first compute engine, similarities between a to-be-searched image and a plurality of images comprised in a gallery comprises:

converting, by the first compute engine, the query vector into a query matrix, converting the center vectors into center matrices, and obtaining a distance table based on the query matrix and the center matrices, wherein the distance table is used to determine the distances between the query vector corresponding to the to-be-searched image and the center vectors corresponding to the plurality of images.

16. The method according to claim 15, wherein the system further comprises a shared memory, and the shared memory is connected to the first compute engine through an internal bus; and

the first compute engine stores the distance table in the shared memory through the internal bus.

17. The method according to claim 16, wherein the shared memory is connected to the second engine through the internal bus; and

the second compute engine obtains the distance table from the shared memory, and determines, based on the distance table, whether the gallery comprises the target image similar to the to-be-searched image.

18. The method according to claim 17, wherein the system further comprises a third compute engine, the third compute engine obtains an index list corresponding to the images in the gallery, and the second compute engine is specifically configured to: obtain the distance table from the shared memory, and determine, based on the distance table, whether the gallery comprises the target image similar to the to-be-searched image; and

the second compute engine obtains a distance matrix based on the distance table and the index list, wherein the distance matrix is used to indicate a distance value associated with each index in the index list; and determines, based on the distance matrix, the distances between the query vector corresponding to the to-be-searched image and the center vectors corresponding to the plurality of images.

19. The method according to claim 18, wherein that the second compute engine determines, based on the distance table, whether the gallery comprises the target image similar to the to-be-searched image comprises:

determining, by the second compute engine based on the distance matrix, a sorting result of the distances between the query vector corresponding to the to-be-searched image and the center vectors corresponding to the plurality of images, and determining the search result.

20. The method according to claim 18, wherein that the second compute engine determines, based on the distance table, whether the gallery comprises the target image similar to the to-be-searched image comprises:

determining, by the second compute engine, the search result based on a preset threshold, wherein a distance between a vector associated with the image comprised in the search result and the query vector meets a preset condition, and the preset condition comprises that the distance between the vector associated with the image and the query vector is greater than or equal to the preset threshold, or the distance between the vector associated with the image and the query vector is less than the preset threshold.

21. The method according to any one of claims 13 to 18, wherein the system is a chip or a PCIe card, and the first compute engine and the second compute engine are connected through the internal bus.

22. The method according to claim 21, wherein the first compute engine and the second compute engine in the compute engine set are separately logic circuits.

23. The method according to any one of claims 13 to 18, wherein the system is a virtualized system, and the first compute engine and the second compute engine in the compute engine set are separately virtual machines or containers running on devices in the virtualized system.

24. The method according to any one of claims 13 to 23, wherein the to-be-searched image is from a search request, and the search request comprises at least one to-be-searched image; or the search request comprises a to-be-searched video, and the to-be-searched video comprises at least one frame of the to-be-searched image.

25. An image search apparatus, wherein the apparatus comprises a first compute unit and a second compute unit, wherein

the first compute unit is configured to compute similarities between a to-be-searched image and a plurality of images comprised in a gallery; and

the second compute unit is configured to determine a search result based on the similarities between the to-be-searched image and the plurality of images comprised in the gallery, wherein the search result comprises whether the gallery comprises a target image similar to the to-be-searched image.

26. The apparatus according to claim 25, wherein the similarities between the to-be-searched image and the plurality of images comprised in the gallery are obtained based on distances between a query vector corresponding to the to-be-searched image and center vectors corresponding to the plurality of images, or the similarities between the to-be-searched image and the plurality of images comprised in the gallery are the distances between the query vector corresponding to the to-be-searched image and the center vectors corresponding to the plurality of images.

27. The apparatus according to claim 26, wherein
the first compute unit is further configured to: convert the query vector into a query matrix, convert the center vectors into center matrices, and obtain a distance table based on the query matrix and the center matrices, wherein the distance table is used to determine the distances between the query vector corresponding to the to-be-searched image and the center vectors corresponding to the plurality of images.

28. The apparatus according to claim 27, wherein the apparatus further comprises a shared memory; and
the second compute unit is further configured to: obtain the distance table from the shared memory, and determine, based on the distance table, whether the gallery comprises the target image similar to the to-be-searched image.

29. The apparatus according to claim 28, wherein the apparatus further comprises a third compute unit,

the third compute unit is configured to: obtain an index list corresponding to the images in the gallery, and the second compute engine is specifically configured to: obtain the distance table from the shared memory, and determine, based on the distance table, whether the gallery comprises the target image similar to the to-be-searched image; and
the second compute unit is further configured to: obtain a distance matrix based on the distance table and the index list, wherein the distance matrix is used to indicate a distance value associated with each index in the index list; and determine, based on the distance matrix, the distances between the query vector corresponding to the to-be-searched image and the center vectors corresponding to the plurality of images.

30. The apparatus according to claim 28, wherein
the second compute unit is further configured to: determine, based on the distance matrix, a sorting result of the distances between the query vector corresponding to the to-be-searched image and the center vectors corresponding to the plurality of images, and determine the search result.

31. The apparatus according to claim 28, wherein
the second compute unit is further configured to determine the search result based on a preset threshold, wherein a distance between a vector associated with the image comprised in the search result and the query vector meets a preset condition, and the preset condition comprises that the distance between the vector associated with the image and the query vector is greater than or equal to the preset threshold, or the distance between the vector associated with the image and the query vector is less than the preset threshold.

32. The apparatus according to any one of claims 25 to 31, wherein the to-be-searched image is from a search request, and the search request comprises at least one to-be-searched image; or the search request comprises a to-be-searched video, and the to-be-searched video comprises at least one frame of the to-be-searched image.

33. A computer-readable storage medium, wherein the computer-readable storage medium stores instructions, and when the instructions are run on a computer, the computer is enabled to perform the operation steps of the method according to any one of claims 13 to 24.

FIG. 1

FIG. 2

Search
request

Search
result

⬇ ⌐ S201          ⌐ S202          ⌐ S203          ⌐ S204          ⬆ ⌐ S205

| Compute a distance table | ⇨ | Traverse a short feature list | ⇨ | Generate a distance matrix | ⇨ | Accumulate distance vectors | ⇨ | Sort |

Matrix
compute
engine 201

Scalar
compute
engine 203

Vector
compute
engine 202

Scalar
compute
engine 203

FIG. 3

401

A matrix compute engine determines a
distance table based on a query vector
corresponding to a to-be-searched
image in a search request and center
vectors in a gallery

402

A scalar compute engine generates a
distance matrix based on a short
feature list and a distance table

403

A vector compute engine determines,
based on the distance matrix, distance
vectors obtained through accumulation

404

The scalar compute engine determines
a search result based on the distance
vectors obtained through accumulation

FIG. 4

Segment 1             Segment M

Query vector 1 | Vector 11 | ... | Vector 1M |

Segment 1             Segment M

Center vector 1 | Vector 11 | | | Vector 1M |
Center vector 2 | Vector 21 | | | Vector 2M |
| ⋮ | | | ⋮ |
Center vector K | Vector K1 | | | Vector KM |

K

Distance computing        Distance computing

Distance table

| $D_{11}$ | $D_{12}$ | ... | $D_{1M}$ |
|----------|----------|-----|----------|
| $D_{21}$ | $D_{22}$ | ... | $D_{2M}$ |
| ⋮ | ⋮ | | ⋮ |
| $D_{K1}$ | $D_{K2}$ | ... | $D_{KM}$ |

FIG. 5

EP 4 167 107 A1

Query
vector 1

Vector 11
Vector 12
Vector 1M

Vector 11
Vector 12
Vector 1M
Center
vector 1

Vector 11
Vector 12
Vector 1M
Center
vector 2

Vector 11
Vector 12
Vector 1M
Center
vector K

First matrix
Vector 11
Vector 12
Vector 1M

X

Second matrix
Vector 11
Vector 12
Vector 1M

+

Third matrix
Vector 11
Vector 12
Vector 1M

FIG. 6

FIG. 7

203

Scalar
compute engine

Read

② Read ③ Write ④ 205

Second memory

Short feature
list (clip)

Distance table

Distance
matrix

①

Direct memory
access engine

204

①

First memory

30

Short feature list
(universal set)

FIG. 8

Distance matrix

Vector results

| $D_{00}$ | $D_{01}$ | ... | $D_{0M}$ |
|---|---|---|---|
| $D_{10}$ | $D_{11}$ | ... | $D_{1M}$ |
| | | ... | |
| $D_{(K-1)0}$ | $D_{(K-1)1}$ | ... | $D_{(K-1)M}$ |

Accumulation
operation

⇨

| V0 |
|---|
| V1 |
| ... |
| VM |

FIG. 9

FIG. 10

Matrix compute
engine
201

Generate a distance table

Vector compute
engine
202

(1)

(2)

Accumulate vectors

Scalar compute
engine
203

Generate a distance matrix

(3)

Scalar compute
engine
203

Perform top X sorting

FIG. 11

600

Apparatus

First compute
unit
601

Second compute
unit
602

Third compute
unit
603

FIG. 12

## INTERNATIONAL SEARCH REPORT

| International application No. |
|---|
| **PCT/CN2021/099890** |

**A.    CLASSIFICATION OF SUBJECT MATTER**

G06F 16/583(2019.01)i

According to International Patent Classification (IPC) or to both national classification and IPC

**B.    FIELDS SEARCHED**

Minimum documentation searched (classification system followed by classification symbols)

G06F, G06K

Documentation searched other than minimum documentation to the extent that such documents are included in the fields searched

Electronic data base consulted during the international search (name of data base and, where practicable, search terms used)

CNABS, CNKI, DWPI, SIPOABS, CNTXT: 图象, 图像, 向量计算, 标量计算, 矩阵计算, 相似度, 异构, 图形处理单元, 神经网络处理器, 短特征, 距离表, 距离矩阵, 距离向量, image, vector computing, vector calculation, scalar computing, scalar calculation, matrix computing, matrix calculation, similarity, heterogeneous, CPU, NPU, short feature, distance table, distance matrix, distance vector

**C.    DOCUMENTS CONSIDERED TO BE RELEVANT**

| Category* | Citation of document, with indication, where appropriate, of the relevant passages | Relevant to claim No. |
|---|---|---|
| X | CN 110543578 A (HUAWEI TECHNOLOGIES CO., LTD.) 06 December 2019 (2019-12-06) description paragraphs [0152]-[0469], description figure figure 1, figure 27 | 1-33 |
| A | CN 103778240 A (INFORMATION ENGINEERING OF UNIVERSITY, PLA.) 07 May 2014 (2014-05-07) see entire document | 1-33 |
| A | CN 101236565 A (NANJING UNIVERSITY) 06 August 2008 (2008-08-06) see entire document | 1-33 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 September 2021** | **16 September 2021** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/099890**

| Patent document cited in search report | | | Publication date (day/month/year) | Patent family member(s) | | | Publication date (day/month/year) |
|---|---|---|---|---|---|---|---|
| CN | 110543578 | A | 06 December 2019 | WO | 2021027789 | A1 | 18 February 2021 |
| CN | 103778240 | A | 07 May 2014 | CN | 103778240 | B | 26 April 2017 |
| CN | 101236565 | A | 06 August 2008 | CN | 100592297 | C | 24 February 2010 |

Form PCT/ISA/210 (patent family annex) (January 2015)